# EUROPEAN PATENT APPLICATION

(11) **EP 4 521 246 A1**
(43) Date of publication of application: **12.03.2025**
(21) Application number: 22943622.5
(22) Date of filing: 30.12.2022
(51) Int. Cl.: G06F 9/50

(54) **RESOURCE SCHEDULING METHOD, APPARATUS AND DEVICE**

(30) Priority: 23.05.2022 CN 202210567253
(71) Applicant: Huawei Cloud Computing Technologies Co., Ltd., Gui'an New District, Guizhou 550025 (CN)
(72) Inventor: YU, Zhou, Guizhou 550025 (CN); SHAN, Chuang, Guizhou 550025 (CN)
(74) Representative: MERH-IP Matias Erny Reichl Hoffmann Patentanwälte PartG mbB
(86) International application number: PCT/CN2022/144276
(87) International publication number: WO 2023/226437

(57) **Abstract**

A resource scheduling method, an apparatus, and a device are provided. In this application, a scheduling apparatus updates a configuration of a computing instance of a computing device in a running process of the computing instance, to schedule physical cores of the computing instance. In the computing device, the physical cores of the computing device include physical cores of a plurality of types. After determining that the configuration of the computing instance needs to be updated, the scheduling apparatus obtains a configuration solution of the computing instance based on status parameters of the physical cores included in a processor of the computing device and a resource allocation strategy, where the configuration solution indicates quantities of physical cores that are of different types and that are included in the computing instance; and updates the configuration of the computing instance based on the configuration solution of the computing instance. The scheduling apparatus updates the configuration of the computing instance in the running process of the computing instance, so that the quantities of physical cores that are of different types and that are included in the computing instance change, and a computing capacity that can be provided by the computing instance changes dynamically.

## Description

### CROSS-REFERENCE TO RELATED APPLICATIONS

This application claims priority to Chinese Patent Application No. 202210567253.1, filed with the China National Intellectual Property Administration on May 23, 2022 and entitled "RESOURCE SCHEDULING METHOD, APPARATUS, AND DEVICE", which is incorporated herein by reference in its entirety.

### TECHNICAL FIELD

This application relates to the field of communication technologies, and in particular, to a resource scheduling method, an apparatus, and a device.

### BACKGROUND

As cloud data centers emerge, users can create their own computing instances on the "cloud" by renting resources from the cloud data centers. The users deploy tasks for the computing instances to meet different computing requirements. Resources occupied by these computing instances are actually resources of servers in the cloud data centers. For example, a processor of the computing instance is a processor in the server, and a core of the computing instance is a core of the processor in the server.

Currently, computing capacities of cores of the processor in the server in the cloud data center are consistent. In other words, types of the cores of the processor in the server are the same. In this case, once the computing instance is created, a quantity of cores of the computing instance does not change. A computing capacity provided by a core of the computing instance for the computing instance remains unchanged.

### SUMMARY

This application provides a resource scheduling method, an apparatus, and a device, to configure a computing instance in a scenario in which a computing device includes a plurality of cores of different types.

According to a first aspect, an embodiment of this application provides a resource scheduling method. The method may be performed by a scheduling apparatus. The scheduling apparatus may be deployed on a computing device, and the scheduling apparatus can update, in a running process of a first computing instance of the computing device, a configuration of the first computing instance, to schedule cores of the first computing instance. In the computing device, physical cores of a processor of the computing device include physical cores of a plurality of types. Herein, an example in which the physical cores of the plurality of types include a first physical core and a second physical core is used for description. Certainly, in addition to the first physical core and the second physical core, the physical cores of the plurality of types may further include a physical core of another type. A scheduling manner of the physical cores of the plurality of types is similar to a scheduling manner of the first physical core and the second physical core. Herein, only the scheduling manner of the first physical core and the second physical core is used as an example for description. In the method, when the scheduling apparatus determines that the configuration of the first computing instance needs to be updated, the scheduling apparatus may obtain status parameters of the physical cores included in the processor of the computing device and a resource allocation strategy. The status parameters of the physical cores describe working statuses of the physical cores. The resource allocation strategy describes a strategy that needs to be followed during physical core scheduling. The scheduling apparatus may obtain a configuration solution of the first computing instance (the configuration solution corresponds to a second configuration solution in embodiments of this application) based on the status parameters of the physical cores included in the processor of the computing device and the resource allocation strategy. The configuration solution indicates quantities of first physical cores and second physical cores included in the first computing instance. After obtaining the configuration solution, the scheduling apparatus may update the configuration of the first computing instance based on the configuration solution of the first computing instance. The first physical core included in the first computing instance is a first physical core occupied by the first computing instance. The second physical core included in the first computing instance is a second physical core occupied by the first computing instance.

According to the foregoing method, the scheduling apparatus updates a configuration of a computing instance in a running process of the computing instance, so that quantities of physical cores that are of different types and that are occupied by the computing instance change, and a computing capacity that can be provided by the computing instance can change dynamically. In this way, it can be ensured that the computing capacity that can be provided by the computing instance better matches a computational workload of a task that needs to be executed by the computing instance, and it can also be ensured that the physical cores in the computing device can be efficiently utilized.

In a possible implementation, there are many scenarios in which the scheduling apparatus determines that the configuration of the first computing instance needs to be updated. Only several of the scenarios are described herein as examples.

In a first scenario, a quantity of required computing resources does not match a computing capacity provided by the first computing instance.

The quantity of required computing resources indicates a quantity of computing resources required by a task running on the first computing instance. The computing capacity provided by the first computing instance is a computing capacity of a physical core occupied by the first computing instance.

In this scenario, the mismatch between the quantity of required computing resources and the computing capacity provided by the first computing instance may be a mismatch between the quantity of computing resources required by the task in the first computing instance and a computing capacity of a physical core currently executing the task. For example, the quantity of computing resources required by the task is higher than the computing capacity of the physical core currently executing the task. For another example, the quantity of computing resources required by the task is less than the computing capacity of the physical core currently executing the task.

In a second scenario, an idle physical core in the computing device does not meet a resource requirement of a to-be-created second computing instance. The resource requirement of the second computing instance is a quantity of physical cores that are of different types that need to be occupied by the second computing instance.

In a third scenario, resource utilization of one or more physical cores in the computing device is lower than a utilization threshold.

In the computing device, a utilization threshold may be set for a physical core of each type. Utilization thresholds of physical cores of different types may be the same or may be different. When the resource utilization of one or more physical cores in the computing device is lower than a utilization threshold of a corresponding type, it indicates that the physical core does not run efficiently, and there may be a waste of resources.

According to the foregoing method, the scheduling apparatus may update the configuration of the first computing instance in different scenarios, so that an application scope is effectively extended.

In a possible implementation, when obtaining the configuration solution of the first computing instance, the scheduling apparatus may change the quantities of physical cores that are of different types and that need to be occupied by the first computing instance. In the first scenario described above, a physical core whose computing capacity matches the quantity of computing resources required by the task may be determined based on the quantity of computing resources required by the task, and the physical core is used as the physical core that needs to be occupied by the first computing instance. The physical core currently executing the task may also be used as a physical core that does not need to be occupied by the first computing instance. In the second scenario described above, the quantities of physical cores that are of different types and that are occupied by the first computing instance may be adjusted, so that an adjusted idle physical core in the computing device can meet the resource requirement of the second computing instance. In the third scenario described above, if the physical core occupied by the first computing instance includes a target physical core. Resource utilization of the target physical core is lower than the utilization threshold. The scheduling apparatus may adjust a type of the target physical core from the first physical core to the second physical core. The computing capacity of the first physical core is higher than the computing capacity of the second physical core.

According to the foregoing method, the scheduling apparatus may obtain the configuration solution of the first computing instance in a corresponding manner in different scenarios.

In a possible implementation, after updating the configuration of the first computing instance, the scheduling apparatus can allocate a task to the physical core occupied by the first computing instance, that is, may configure, for the first physical core or the second physical core occupied by the first computing instance, a task that needs to be executed.

According to the foregoing method, the physical cores of different types may execute a task that matches the computing capacity of the physical core, to ensure that the physical core can run efficiently, and improve execution efficiency of the task.

In a possible implementation, when configuring, for the first physical core or the second physical core occupied by the first computing instance, the task that needs to be executed, the scheduling apparatus may obtain a quantity of computing resources required by the task. The quantity of computing resources required by the task is a quantity of computing resources required by a task running on the first computing instance, and can represent computational workload of the task. The quantity of required computing resources may reflect, to some extent, a computing capacity that needs to be possessed by a physical core executing a task. The scheduling apparatus may determine, based on the quantity of computing resources required by the task, the first physical core or the second physical core that executes the task.

According to the foregoing method, the quantity of computing resources required by the task matches a computing capacity of the physical core executing the task, so that accuracy of task allocation is ensured.

In a possible implementation, the quantity of computing resources required by the task is determined based on a performance parameter of the computing device in a running process of the task.

According to the foregoing method, the quantity of computing resources required by the task can be relatively conveniently determined by using some existing performance parameters in the computing device.

According to a second aspect, an embodiment of this application further provides a scheduling apparatus. The scheduling apparatus has a function of implementing the behavior in the method example in the first aspect. For beneficial effects, refer to the descriptions in the first aspect. Details are not described herein again. The function may be implemented by hardware, or may be implemented by executing corresponding software by hardware. The hardware or software includes one or more modules corresponding to the foregoing function. In a possible design, a structure of the apparatus includes a physical core scheduling unit. The physical core scheduling unit may include a determining unit, an obtaining unit, and a configuration unit. Optionally, the apparatus may further include a task scheduling unit. These units may perform corresponding functions in the method example in the first aspect. For details, refer to the detailed descriptions in the method example. Details are not described herein again.

According to a third aspect, an embodiment of this application further provides a computing device. The computing device has a function of implementing the behavior of an example of scheduling apparatus in the method example in the first aspect. For beneficial effects, refer to the descriptions in the first aspect. Details are not described herein again. A structure of the computing device includes a processor and a memory. The processor is configured to support the scheduling apparatus in performing a corresponding function in the method in the first aspect. The memory is coupled to the processor, and stores program instructions and data that are necessary for a communication apparatus. The structure of the communication apparatus further includes a communication interface, configured to communicate with another device.

According to a fourth aspect, this application further provides a computer-readable storage medium. The computer-readable storage medium stores instructions. When the instructions are run on a computer, the computer is enabled to perform the method according to any one of the first aspect and any possible design of the first aspect.

According to a fifth aspect, this application further provides a computer program product including instructions. When the computer program product is run on a computer, the computer is enabled to perform the method according to any one of the first aspect and any possible design of the first aspect.

According to a sixth aspect, this application further provides a computer chip. The chip is connected to a memory, and the chip is configured to read and execute a software program stored in the memory, to perform the method according to any one of the first aspect and the possible implementations of the first aspect.

### BRIEF DESCRIPTION OF DRAWINGS

FIG. 1 is a diagram of a structure of a computing device according to this application;
FIG. 2 is a diagram of a structure of another computing device according to this application;
FIG. 3 and FIG. 4 are diagrams of a resource scheduling method according to this application; and
FIG. 5 is a diagram of a structure of a scheduling apparatus according to this application.

### DESCRIPTION OF EMBODIMENTS

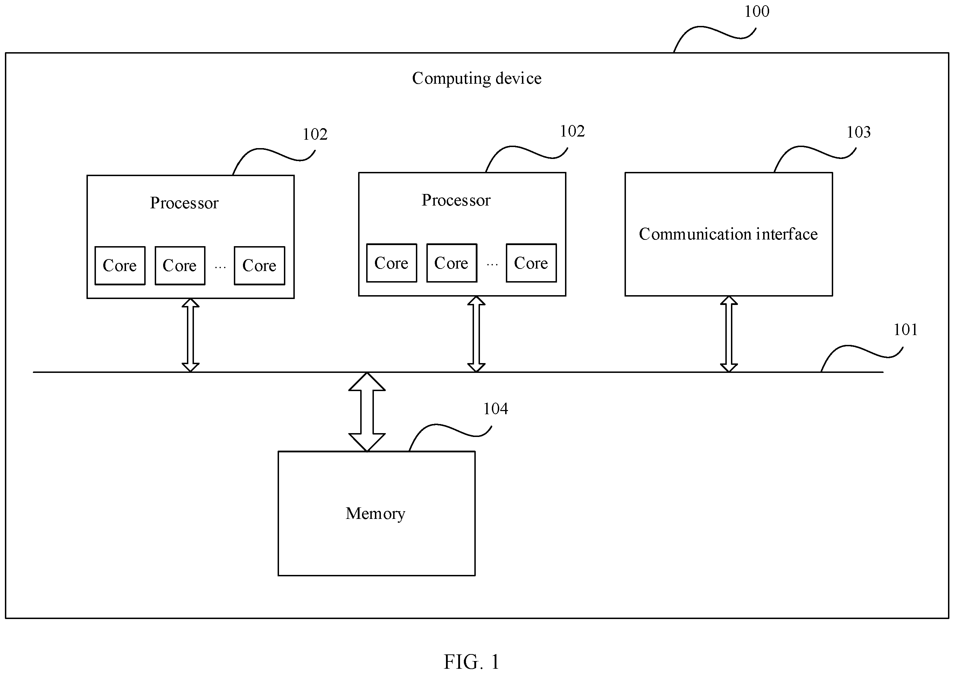

FIG. 1 is a diagram of a structure of a computing device according to an embodiment of this application. A computing device 100 includes a bus 101, processors 102, a communication interface 103, and a memory 104. The processors 102, the memory 104, and the communication interface 103 communicate with each other through the bus 101.

The processor 102 may be a general-purpose processor, for example, a central processing unit (central processing unit, CPU), or a combination of a CPU and a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), generic array logic (generic array logic, GAL), or any combination thereof.

A quantity of processors 102 in the computing device 100 is not limited in embodiments of this application. The computing device 100 may include one processor 102, or may include a plurality of processors 102.

For any processor 102, the processor 102 may include one or more cores (cores). The core is a main unit that undertakes a computing function in the processor 102. When one processor 102 includes the plurality of cores, the plurality of cores may be a plurality of cores of a same type, or may be cores of different types. In this embodiment of this application, a type of the core is determined mainly based on performance of the core (the performance of the core is reflected in a computing capacity of the core, an area occupied by the core, and the like). Cores with same performance are the cores of the same type, and cores with different performance are the cores of the different types. Types of cores included in different processors 102 may be the same or may be different. In this embodiment of this application, there are at least two types of cores in all cores of the computing device 100.

The memory 104 may include a volatile memory (volatile memory), for example, a random access memory (random access memory, RAM). The memory 104 may further include a non-volatile memory (non-volatile memory, NVM), for example, a read-only memory (read-only memory, ROM), a flash memory, a hard disk drive (hard disk drive, HDD), or a solid-state drive (solid-state drive, SSD). The memory 104 may further include a combination of the foregoing types.

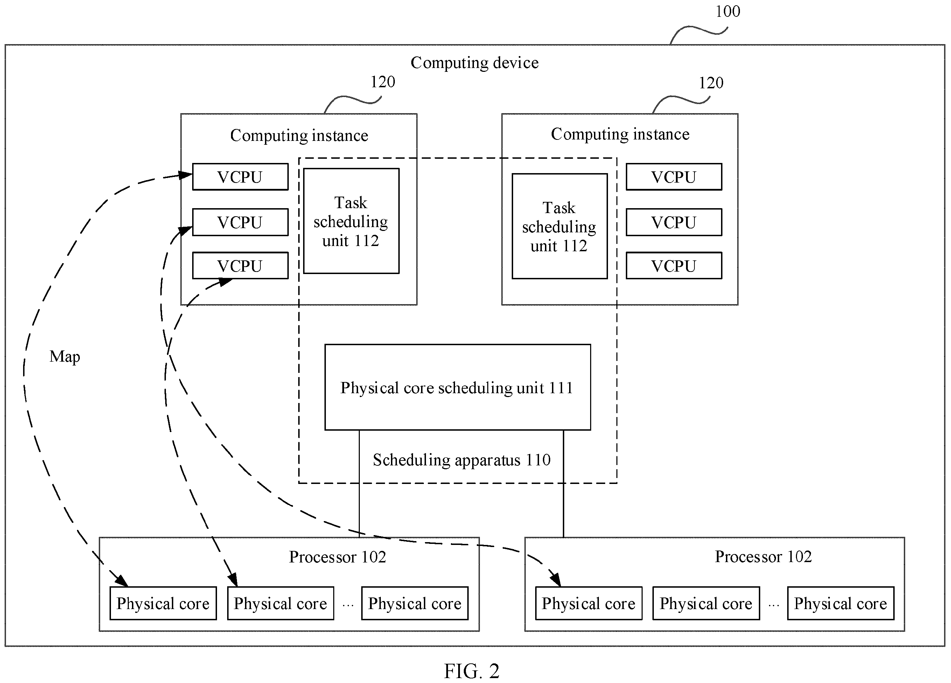

FIG. 2 is a diagram of a structure of another computing device according to an embodiment of this application. In FIG. 2, a computing device 100 is divided at a software level. One or more computing instances 120 are allowed to be deployed on the computing device 100. The computing device 100 may further include a scheduling apparatus 110.

In the computing device 100, virtualization may be implemented based on a hardware component (the hardware component may be each component of the computing device 100 shown in FIG. 1) of the computing device 100. The computing instance 120 is allowed to be deployed on the computing device 100 through virtualization. The computing instance 120 may be a virtual machine or may be a container. Alternatively, the computing instance 120 may be a software module formed based on virtualization of the hardware component of the computing device 100.

The computing device 100 provides resources to the computing instance 120 deployed on the computing device 100. Physical resources (such as a processor, a memory, or a communication interface) in the computing device 100 may be converted into some virtual resources through virtualization for use by the computing instance 120. In other words, there is a correspondence between the physical resources and the virtual resources. For example, a processor 102 of the computing device 100 may be virtualized into one or more virtual central processing units (virtual central processing units, VCPUs). Any computing instance 120 on the computing device 100 may occupy the VCPU, and complete an operation by using the VCPU. One VCPU is actually a part of computing resources of the processor of the computing device 100. A memory 104 of the computing device 100 may be virtualized into one or more virtual memories. Any computing instance 120 on the computing device 100 may occupy the virtual memory, implement data storage, and cooperate with the VCPU to complete an operation. The virtual memory is actually a part of the memory 104 of the computing device 100.

Specifically, for virtualization at a granularity of a processor core, when the processor 102 of the computing device 100 supports hyper-threading, for example, a core of one processor 102 can support two or more hyper-threads, that is, the processor 102 supports thread-level parallel computing, one hyper-thread on the core of the processor 102 of the computing device 100 can be virtualized into one virtual processor. The computing instance 120 completes an operation by using the hyper-thread. The virtual processor actually corresponds to one hyper-thread on one core of the processor 102 of the computing device 100. That is, one virtual processor is one hyper-thread.

For example, the processor 102 may support two hyper-threads. When it is required that the computing instance includes four virtual central processing units, the four virtual central processing units are four hyper-threads. The four virtual central processing units may be associated with two cores of the processor 102, and two hyper-threads on each of the two cores are virtualized into two virtual central processing units. The four virtual central processing units may be associated with four cores of the processor 102, and one hyper-thread on each of the four cores is virtualized into one virtual processor. Regardless of whether the four virtual central processing units are associated with the two cores of the processor 102 or the four cores of the processor 102, there is always a mapping relationship between the virtual central processing units and the cores of the processor 102.

When the processor 102 of the computing device 100 does not support hyper-threading, one core of the processor 102 of the computing device 100 may be virtualized into one virtual processor. The computing instance 120 completes an operation by using the core. The virtual processor actually corresponds to one core of the processor 102 of the computing device 100. In other words, one virtual processor is one core of the processor 102.

It can be learned that the core of the processor 102 of the computing device 100 is enabled to be virtualized into one virtual processor of the computing instance 120 through the virtualization at the granularity of the core, and there is the mapping relationship between the core of the processor 102 and the virtual processor. In embodiments of this application, for ease of description, the core of the processor 102 is referred to as a physical core.

It should be noted that the mapping relationship between the physical core of the processor 102 and the virtual processor does not always remain unchanged. When a configuration of the computing instance changes, for example, when a physical core occupied by the computing instance changes, the mapping relationship between the physical core of the processor 102 and the virtual processor also changes.

To implement scheduling of the physical core in the computing device 100 and complete virtualization from the physical core to the virtual processor, the scheduling apparatus 110 may be further deployed on the computing device 100.

The scheduling apparatus 110 is configured to implement resource scheduling of the computing instance 120 in creation and running processes of the computing instance 120. The resource scheduling includes an update of the configuration of the computing instance 120 and task allocation of the virtual processor.

In this embodiment of this application, the configuration solution of the computing instance 120 describes physical resources occupied by the computing instance 120, for example, a physical core or a memory (the memory is understood as a type of storage). The update of the configuration of the computing instance 120 is an update of the configuration solution of the computing instance 120. In this embodiment of this application, a configuration solution based on which the computing instance 120 is created is referred to as a first configuration solution, and a configuration solution based on which the configuration of the computing instance 120 is updated is referred to as a second configuration solution.

In embodiments of this application, the update of the configuration of the computing instance 120 is mainly a change of the physical core occupied by the computing instance 120. The physical core occupied by the computing instance 120 is a physical core included in the computing instance 120, and is a physical core that has the mapping relationship with the virtual central processing unit 102 in the computing instance 120.

The task allocation of the virtual processor is allocating a task to the virtual processor, so that the virtual processor executes the allocated task. The task executed by the virtual processor is a task executed by a physical core to which the virtual processor is mapped. In this case, the task allocation of the virtual processor can be essentially understood as task allocation of the physical core.

It should be noted that, when the processor 102 supports hyper-threading, and one virtual processor is the hyper-thread on the physical core, a task that needs to be executed by the virtual processor is executed by the hyper-thread on the physical core. The hyper-thread may be understood as a computing resource on the physical core. Executing the task by the hyper-thread is also essentially executing the task by the physical core on which the hyper-thread is located.

The following separately describes operations performed by the scheduling apparatus 110 in creation and running processes of the computing instance 120.

### (1) In the creation process of the computing instance 120

The scheduling apparatus 110 can monitor a status of the physical resources in the computing device 100, for example, the scheduling apparatus 110 may determine a status parameter of the physical core in the computing device 100. The scheduling apparatus 110 can further obtain a resource allocation strategy of the computing instance 120 in the computing device 100.

When creating the computing instance 120, the scheduling apparatus 110 obtains the first configuration solution of the computing instance 120 based on the status of the physical resources and/or the resource allocation strategy of the computing instance 120 that are in the computing device 100, and creates the computing instance 120 based on the first configuration solution. The first configuration solution of the computing instance 120 describes physical resources that can be occupied by the computing instance 120, for example, a quantity of physical cores and a memory size that can be occupied. After the scheduling apparatus 110 configures the computing instance 120, the creation of the computing instance 120 is completed. During the creation of the computing instance 120, the physical core (or the hyper-thread on the physical core) is mapped to the virtual processor of the computing instance 120, and the mapping relationship between the virtual processor and the physical core (or the hyper-thread on the physical core) is recorded.

### (2) In the running process of the computing instance 120

In the running process of the computing instance 120, the scheduling apparatus 110 may further allocate, based on a computing capacity of the virtual processor and a quantity of computing resources required by the task that needs to be executed by the computing instance 120, the task that needs to be executed by the computing instance 120 to the virtual processor, and the allocated task is executed by the virtual processor.

The scheduling apparatus 110 can further update the configuration of the computing instance 120 in the running process of the computing instance 120, for example, update quantities of physical cores that are of different types and that can be occupied by the computing instance 120. The scheduling apparatus 110 may configure the second configuration solution for the computing instance 120. The second configuration solution describes resources that need to be occupied by the computing instance 120, for example, the quantities of physical cores that are of different types and that can be occupied by the computing instance 120. When idle physical resources in the current computing device 100 can support the second configuration solution of the computing instance 120, the computing instance 120 is reconfigured based on the second configuration solution. During the reconfiguration of the computing instance 120, the mapping relationship between the virtual processor and the physical core (or the hyper-thread on the physical core) is changed, so that remapping of the virtual processor is implemented. For example, the scheduling apparatus 110 may change a mapping relationship between the virtual processor and a physical core (or a hyper-thread on the physical core) with a relatively weak computing capacity to a mapping relationship between the virtual processor and a physical core (or a hyper-thread on the physical core) with a relatively strong computing capacity, to improve the computing capacity of the virtual processor. The scheduling apparatus 110 may change the mapping relationship between the virtual processor and the physical core (or the hyper-thread on the physical core) with the relatively strong computing capacity to the mapping relationship between the virtual processor and the physical core (or the hyper-thread on the physical core) with the relatively strong computing capacity, to reduce the computing capacity of the virtual processor.

After the mapping relationship between the virtual processor and the physical core (or the hyper-thread on the physical core) is changed, the scheduling apparatus 110 may further reallocate, based on the computing capacity of the virtual processor and the quantity of computing resources required by the task, the task that needs to be executed by the virtual processor, that is, implement task reallocation of the virtual processor.

For ease of description, the following does not particularly distinguish between two mapping relationships: the mapping relationship between the virtual processor and the physical core and the mapping relationship between the virtual processor and the hyper-thread on the physical core. The two mapping relationships are uniformly referred to as the mapping relationship between the virtual processor and the physical core in the following description. However, it should be understood that content indicated by the mapping relationship mainly depends on an attribute of the processor 102 in the computing device 100. When the processor 102 supports the hyper-threading (or when the virtual processor is one hyper-thread), a mapping relationship is the mapping relationship between the virtual processor and the hyper-thread on the physical core. When the processor 102 does not support the hyper-threading, a mapping relationship is the mapping relationship between the virtual processor and the physical core.

The scheduling apparatus 110 may be a software module run in the computing device 100. The scheduling apparatus 110 is divided from a perspective of a function. As shown in FIG. 2, the scheduling apparatus 110 includes a physical core scheduling unit 111 and task scheduling units 112.

The physical core scheduling unit 111 may implement resource scheduling of the computing instance 120. In this embodiment of this application, the physical core scheduling unit 111 may mainly implement scheduling of the physical core of the computing instance 120. For example, when creating the computing instance 120, the physical core scheduling unit 111 obtains the first configuration solution of the computing instance 120 based on the status parameter of the physical core and/or the resource allocation strategy of the computing instance 120 that are in the computing device 100, and creates the computing instance 120 based on the first configuration solution. For another example, in the running process of the computing instance 120, the physical core scheduling unit 111 updates the configuration of the computing instance 120, for example, obtains, based on the status parameter of the physical core and/or the resource allocation strategy of the computing instance 120 that are in the computing device 100, the second configuration solution configured for the computing instance 120, and updates the configuration of the computing instance 120 by using the second configuration solution.

In other words, scheduling of all physical cores in the configuration of the computing instance 120 in the scheduling apparatus 110 may be performed by the physical core scheduling unit 111. The physical core scheduling unit 111 may be run in a core module that is in the computing device 100 and that implements a virtualization technology. For example, the physical core scheduling unit 111 may be used as a part of a hypervisor. For another example, the physical core scheduling unit 111 may be used as a part of a host operating system (host operating system, host OS) on the computing device 100.

The task scheduling unit 112 may implement task allocation (which includes task reallocation) of the virtual processor. For example, after the computing instance 120 is created, the task scheduling unit 112 allocates a task to the virtual processor of the computing instance 120. For another example, when the configuration of the computing instance 120 is updated (the mapping relationship between the virtual processor and the physical core is changed), a task is reallocated to the virtual processor of the computing instance 120. One computing instance 120 may correspond to one task scheduling unit 112. All operations related to the task allocation on the computing instance 120 may be performed by the task scheduling unit 112. The task scheduling unit 112 may be run in the corresponding computing instance 120.

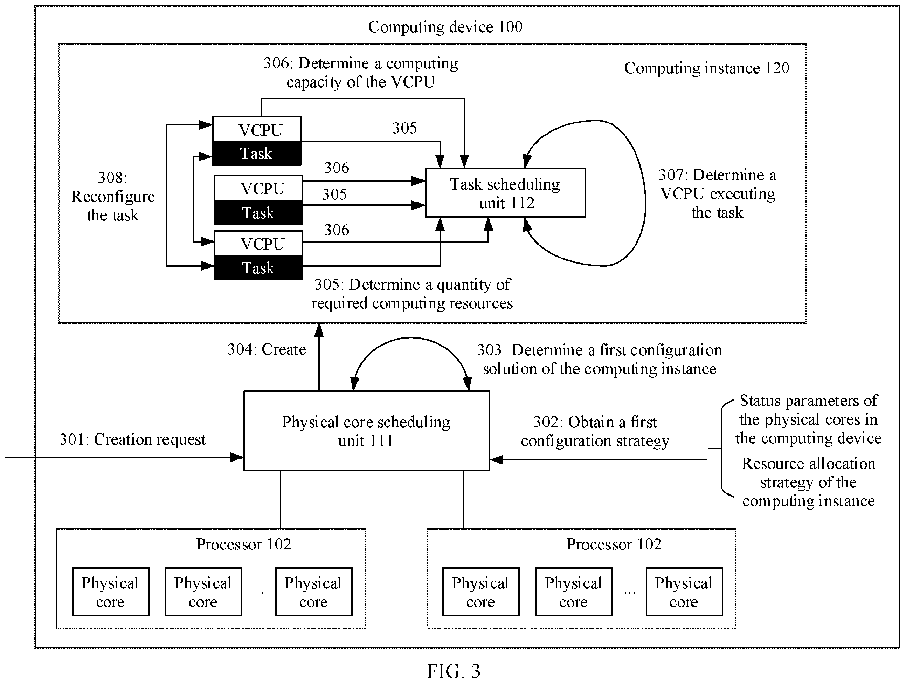

The following describes, with reference to FIG. 3, a physical resource scheduling method according to an embodiment of this application. In the embodiment shown in FIG. 3, an example in which physical cores in a computing device 100 include two types of physical cores is used for description. To distinguish between the two types of physical cores in a processor 102, a physical core with a relatively strong computing capacity in the two types of physical cores may be referred to as a first physical core, and a physical core with a relatively weak computing capacity in the two types of physical cores may be referred to as a second physical core.

The method provided in this embodiment of this application is also applicable to a scenario in which the physical cores in the computing device 100 include at least two types of physical cores. A specific implementation is similar to an implementation in a scenario in which the physical cores in the computing device 100 include two types of physical cores.

Step 301: A physical core scheduling unit 111 receives a creation request, where the creation request is used to request to create a computing instance 120, and the computing request carries a specification of the computing instance 120. Optionally, the creation request may further carry a priority of the computing instance 120. The specification of the computing instance 120 describes resources that need to be occupied by the computing instance 120. The resources include a quantity of virtual central processing units, and may further include a memory size and the like. The quantity of virtual central processing units may also be referred to as a quantity of cores of the computing instance 120.

It should be noted that the quantity of cores of the computing instance 120 is essentially a quantity of physical cores or a quantity of hyper-threads.

When a user needs to create the computing instance 120 to complete some tasks by using the computing instance 120, the user may trigger generation of the creation request. For example, a client is deployed on a user side. A connection between the user and the computing device 100 may be established via the client. The user performs operation on the client to configure the specification of the computing instance 120 that needs to be created and the priority of the computing instance 120. After the operation of the user is detected, the client may generate the creation request and send the creation request to the computing device 100.

In this embodiment of this application, the priority of the computing instance 120 may be configured in the following two manners.

Manner 1: The priority of the computing instance 120 is determined based on an attribute of the user.

To be specific, the priority of the computing instance 120 is related to the attribute of the user. Priorities of all computing instances 120 that need to be created by the user are the same. Provided that the user who requests the creation of the computing instance 120 is determined, a priority of the computing instance 120 that needs to be created is also determined.

Scenario 1: The attribute of the user may be a level of the user. Different users may have different levels. For example, the user may choose to become a regular user, an important user, or a highly important user by paying different fees. Users with different levels have different permissions, and priorities of computing instances 120 that can be created are different. A priority of a computing instance 120 requested to be created by a user with a high level is high and a priority of a computing instance 120 requested to be created by a user with a low level is low.

Scenario 2: The attribute of the user may be a type of the user. There may be a plurality of types of users. For example, the types of the user may be categorized as an individual user or an enterprise-level user. Tasks that need to be executed by computing instances 120 requested to be created by users of different types may be different. For example, a task that needs to be executed by a computing instance 120 requested to be created by the enterprise-level user may require a large amount of computing, and a priority of the computing instance 120 may be relatively high. A task that needs to be executed by a computing instance 120 requested to be created by the individual user requires a relatively small amount of computing, and a priority of the computing instance 120 may be relatively low.

Manner 2: The priority of the computing instance 120 is selected by the user.

When requesting to create the computing instance 120, the user may select the specification and the priority of the computing instance 120. In other words, computing instances 120 with different priorities may be provided to the user on the client side for the user to select.

Step 302: The physical core scheduling unit 111 obtains a first configuration strategy after receiving the creation request. The first configuration strategy includes some or all of the following: status parameters of the physical cores in the computing device 100 and a preconfigured resource allocation strategy of the computing instance 120.

The status parameters of the physical cores in the computing device 100 describe working statuses of the physical cores, for example, whether the physical core is occupied (that is, whether the physical core has been configured for the computing instance 120) or a time slice of the physical core. The time slice of the physical core is duration, when the physical core is configured for the computing instance 120, that is for executing a task of the computing instance 120 and that is configured for the physical core.

The physical core scheduling unit 111 is deployed on the computing device 100, and may perform detection on a status parameter of the processor 102 of the computing device 100. For example, in a running process of the computing device 100, an operating system of the computing device 100 can monitor each hardware component of the computing device 100. For example, the operating system of the computing device 100 may collect statistics on the status parameter of the processor 102. The physical core scheduling unit 111 may determine the status parameter of the processor 102 of the computing device 100 by reading data obtained through monitoring by the operating system.

Specifically, for each processor 102, the physical core scheduling unit 111 may further learn of a type of each physical core in the processor 102, and may also learn of the status parameter of each physical core. For example, the physical core scheduling unit 111 determines that there are two types of physical cores: the first physical core and the second physical core in the processor 102. The physical core scheduling unit 111 may determine a status parameter of the first physical core, for example, determine whether the first physical core is occupied and a time slice of the first physical core, and whether the second physical core is occupied and a time slice of the second physical core.

The resource allocation strategy of the computing instance 120 describes a strategy that needs to be followed when resources are allocated to the computing instance 120. The resource allocation strategy of the computing instance 120 may be preconfigured for the physical core scheduling unit 111, so that the physical core scheduling unit 111 performs resource scheduling based on the resource allocation strategy of the computing instance 120 when creating or updating the resources of the computing instance 120.

Content recorded by the resource allocation strategy of the computing instance 120 is not limited in this embodiment of this application. For example, the resource allocation strategy of the computing instance 120 may indicate to preferentially allocate a physical core with a relatively strong computing capacity (for example, the first physical core) to the computing instance 120 during resource scheduling. For another example, the resource allocation strategy of the computing instance 120 may indicate to preferentially allocate a physical core with a relatively weak computing capacity (for example, the second physical core) to the computing instance 120 during resource scheduling. For another example, the resource allocation strategy of the computing instance 120 may indicate whether the priority of the computing instance 120 is considered during resource scheduling. If the priority of the computing instance 120 is considered, the physical core with the relatively strong computing capacity is preferentially allocated to a computing instance 120 with a high priority, or resource scheduling is preferentially performed on the computing instance 120 with the high priority.

Step 303: The physical core scheduling unit 111 obtains a first configuration solution of the computing instance 120 based on the first configuration strategy and the creation request. In this embodiment of this application, the first configuration solution of the computing instance 120 records quantities of physical cores that are of one or more types and that can be occupied by the computing instance 120. The first configuration solution of the computing instance 120 may further record another resource that can be occupied by the computing instance 120, for example, a memory size that can be occupied by the computing instance 120.

The physical core scheduling unit 111 may obtain the specification of the computing instance 120, for example, the quantity of cores of the computing instance 120, from the creation request, and may further learn of the priority of the computing instance 120 from the creation request. The physical core scheduling unit 111 may learn of, from the first configuration strategy, a quantity of currently idle first physical cores and a quantity of idle second physical cores, and may further learn of the resource allocation strategy of the computing instance 120.

For example, a quantity of cores recorded in the specification of the computing instance 120 is 4, and the priority of the computing instance 120 is a highest priority. If the resource allocation strategy of the computing instance 120 indicates that resources need to be allocated based on the priority of the computing instance 120, the physical core scheduling unit 111 may allocate a largest quantity of first physical cores to the computing instance 120. For example, there are three idle first physical cores and 10 idle second physical cores currently. In this case, the physical core scheduling unit 111 may allocate three first physical cores and one second physical core to the computing instance 120.

Step 304: The physical core scheduling unit 111 creates the computing instance 120 based on the first configuration solution of the computing instance 120.

When creating the computing instance 120, the physical core scheduling unit 111 configures, for the computing instance 120, a physical core recorded in the first configuration solution of the computing instance 120, and establishes a mapping relationship between the physical core and the virtual processor. The physical core scheduling unit 111 may send the mapping relationship between the physical core and the virtual processor to a task scheduling unit 112.

The scheduling apparatus 110 completes the creation of the computing instance 120 through steps 301 to 304. After the computing instance 120 is created, the computing instance 120 needs to execute one or more tasks. The one or more tasks that need to be executed by the computing instance 120 may be one or more tasks configured for the computing instance 120 by the user after the computing instance 120 is created. For example, for the computing instance 120, the user may start the task by triggering the computing instance 120 to execute a binary program or a script.

After the one or more tasks configured by the user is detected, the task scheduling unit 112 allocates the task to each virtual processor. When the one or more tasks are received for the first time, the task scheduling unit 112 cannot clearly determine a computational workload when the one or more tasks run. Therefore, when the one or more tasks are received for the first time, a manner in which the task scheduling unit 112 allocates the task to each virtual processor is relatively flexible.

For example, the task scheduling unit 112 may preferentially configure, based on a sequence in which the one or more tasks are received, the task for a virtual processor that is in the computing instance 120 and that has a mapping relationship with the first physical core. When there is no virtual processor that has the mapping relationship with the first physical core, the task is then configured for a virtual processor that is in the computing instance 120 and that has a mapping relationship with the second physical core. In addition to configuring a virtual processor for each task, the task scheduling unit 112 may further configure, for the virtual processor, a time slice for executing the task (configuring, for the virtual processor, the time slice for executing the task is essentially configuring the time slice for the physical core that has the mapping relationship with the virtual processor), that is, configure, for the virtual processor, duration for executing the task. For another example, the task scheduling unit 112 randomly configures, for the one or more tasks, a virtual processor for executing each task. After the task scheduling unit 112 configures the task and the corresponding time slice for each virtual processor, the virtual processor may execute the task within the corresponding time slice.

After the one or more tasks run on the computing instance 120 for a period of time, task execution efficiency may be relatively poor in the computing instance 120. For example, in the running process of the task, calculation is slow, or a quantity of errors increases. The reason why the task execution efficiency is relatively poor is that a quantity of computing resources required by the task does not match a computing capacity of the virtual processor currently executing the task. For example, when a task with a large computational workload and a high latency requirement runs on the second physical core, because a computing capacity of the second physical core is relatively weak, computation may not be completed within a specific time. Therefore, in the running process of the computing instance 120, the task scheduling unit 112 can reconfigure a virtual processor for the one or more tasks. In steps 305 to 308, an example in which a virtual processor is reconfigured for one task is used for description. When there are the plurality of tasks on the computing instance 120, a manner of reconfiguring virtual central processing units for the plurality of tasks is similar to a manner of reconfiguring a virtual processor for one task. For details, refer to the following related description.

Step 305: The task scheduling unit 112 determines, based on an execution status of the task, a quantity of computing resources required by the task. The quantity of computing resources required by the task represents a quantity of computing resources required by the task running on the computing instance.

The task scheduling unit 112 may monitor a performance parameter of the computing device 100 when the task is executed. The performance parameter can reflect the execution status of the task.

Content of the performance parameter is not limited in this embodiment of this application. The performance parameter includes but is not limited to: utilization of each physical core occupied by the computing instance 120, an indicator for a total quantity of instructions executed at each clock cycle value during execution of task-relayed program instructions (instruction per clock, IPC), a cache instruction miss (cache miss) quantity indicator (the cache miss quantity indicator describes a quantity of times that an instruction is not read in the cache), a branch prediction failure quantity indicator (the branch prediction failure quantity indicator describes a quantity of errors during branch prediction), and an interruption quantity indicator (a quantity of times that an instruction is interrupted when the instruction is executed in sequence). These performance parameters may be read from a log recorded by the task scheduling unit 112 when the physical cores of the computing device 100 execute the task. The foregoing listed performance parameters are merely examples for description. Any parameter that can reflect the execution status of the task may be used as the performance parameter.

When the performance parameter is determined, the task scheduling unit 112 may further determine the execution status of the task. For example, when the IPC indicator is relatively large (for example, greater than a specified first value), the cache miss quantity indicator is relatively small (for example, lower than a specified second value), the branch prediction failure count indicator is relatively small (for example, lower than a specified third value), or the interruption count indicator is relatively small (for example, lower than a specified fourth value), it indicates that the task is executed efficiently, and execution efficiency of the task is relatively high. When the IPC indicator is relatively small (for example, lower than a specified fifth value), the cache miss quantity indicator is relatively large (for example, greater than a specified sixth value), the branch prediction failure count indicator is relatively large (for example, greater than a specified seventh value), or the interruption count indicator is relatively large (for example, greater than a specified eighth value), it indicates that the execution of the task is relatively slow or errors always occur, and the execution efficiency of the task is low.

The task scheduling unit 112 may calculate, based on the execution status of the task, the quantity of computing resources required by the task. For example, the IPC indicator determines the quantity of computing resources required by the task. IPC thresholds may be preset for physical cores of different types. For example, an IPC threshold of the first physical core is 6, and an IPC threshold of the second physical core is 4. When an IPC indicator for executing a specific task reaches (herein, reaching means greater than or equal to) an IPC threshold of a physical core of a specific type or reaches a product of the IPC threshold of the physical core of the specific type and a specified percentage, it may be considered that a quantity of computing resources required by the task matches a computing capacity of the physical core of this type, that is, the virtual processor executing the task needs to have a mapping relationship with the physical core of this type, that is, the virtual processor executing the task needs to have the computing capacity of the physical core of this type. For another example, the task scheduling unit 112 may calculate, according to a preset calculation formula or algorithm and the performance parameter, a relatively accurate quantity of computing resources required by the task. For example, the task scheduling unit 112 may obtain the quantity of computing resources required by the task based on a product of utilization of the physical core executing the task and the computing capacity of the physical core.

Step 306: The task scheduling unit 112 obtains a computing capacity of each virtual processor on the current computing instance 120. A computing capacity of one virtual processor is a computing capacity of a physical core that has a mapping relationship with the virtual central processing unit.

The task scheduling unit 112 determines the computing capacity of each virtual processor on the current computing instance 120 based on the mapping relationship between the virtual processor and the physical core. When a type of the physical core is determined, the computing capacity of the physical core is also determined. Performing step 306 by the task scheduling unit 112 is essentially to determine a computing capacity of the physical core to which each virtual processor is mapped. In this embodiment of this application, the computing capacity of the physical core may be represented in a quantitative manner. A quantification standard may be consistent with a quantification standard of the quantity of computing resources required by the task.

For example, a computing capacity of the first physical core may be uniformly set to 1000 points, and a computing capacity of the second physical core may be uniformly set to 500 points. When there is the mapping relationship between the virtual processor and the first physical core, the computing capacity of the virtual processor is 1000 points. When there is the mapping relationship between the virtual processor and the second physical core, the computing capacity of the virtual processor is 500 points.

Step 307: The task scheduling unit 112 determines, based on the quantity of computing resources required by the task and the computing capacity of each virtual processor, the virtual processor executing the task.

After the quantity of computing resources required by the task and the computing capacity of each virtual processor are determined, the task scheduling unit 112 may determine whether the computing capacity of the virtual processor currently executing the task matches the quantity of computing resources required by the task.

For example, the task scheduling unit 112 may determine whether a difference between the computing capacity of the virtual processor executing the task and the quantity of computing resources required by the task falls within a preset range. If the difference between the computing capacity of the virtual processor executing the task and the quantity of computing resources required by the task falls within the preset range, it indicates that the computing capacity of the virtual processor executing the task matches the quantity of computing resources required by the task. The task scheduling unit 112 does not need to reconfigure a virtual processor executing the task.

If the difference between the computing capacity of the virtual processor executing the task and the quantity of computing resources required by the task does not fall within the preset range, it indicates that the computing capacity of the virtual processor executing the task does not match the quantity of computing resources required by the task. There are two possible cases.

One possible case is that the computing capacity of the virtual processor executing the task far exceeds (namely, is greater than) the quantity of computing resources required by the task. For example, a virtual processor with a relatively strong computing capacity executes a task with a small computational workload and a low latency requirement. This easily causes a waste of resources. In this case, if there is, in the computing instance 120, a virtual processor with a lower computing capacity than that of the virtual processor currently executing the task, the task scheduling unit 112 may reconfigure a virtual processor for the task, and select one virtual processor with the lower computing capacity than that of the virtual processor currently executing the task to execute the task. Certainly, the computing capacity of the reconfigured virtual processor should match the quantity of computing resources required by the task.

The other possible case is that the computing capacity of the virtual processor executing the task is far lower than (namely, is less than) the quantity of computing resources required by the task. For example, a virtual processor with a relatively weak computing capacity executes a task with a large computational workload and a high latency requirement. This causes relatively low task execution efficiency. In this case, if there is, in the computing instance 120, a virtual processor with a higher computing capacity than that of the virtual processor currently executing the task, the task scheduling unit 112 may reconfigure a virtual processor for the task, and select one virtual processor with the higher computing capacity than that of the virtual processor currently executing the task to execute the task. The computing capacity of the reconfigured virtual processor should match the quantity of computing resources required by the task.

Step 308: The task scheduling unit 112 configures the task to the virtual processor.

After the task scheduling unit 112 reconfigures the virtual processor for the task, the task scheduling unit 112 may allocate the task to the reconfigured virtual processor when a time slice of the virtual processor ends, that is, when the virtual processor no longer executes another task, so that the virtual processor can efficiently execute the task. Alternatively, the task scheduling unit 112 may forcibly end the time slice of the virtual processor, and allocate the task to the virtual processor. Alternatively, when the task has been completed within the time slice (that is, the task has been completed before the time slice ends), the task scheduling unit 112 actively releases remaining time in the time slice, and allocates the task to the virtual processor.

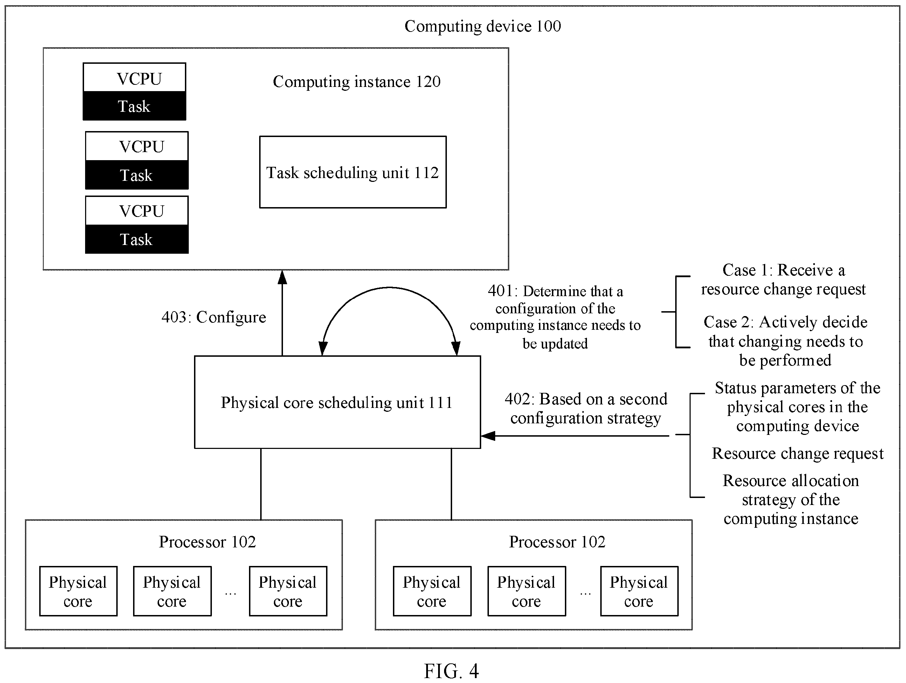

During running of the computing instance 120, the scheduling apparatus 110 may further dynamically update a configuration of the computing instance 120, and in particular, may update quantities of physical cores that are of different types and that are occupied by the computing instance 120. With reference to FIG. 4, the following describes a manner of updating the configuration of the computing instance 120. FIG. 4 mainly describes a manner of updating the quantities of physical cores that are of different types and that are occupied by the computing instance 120.

FIG. 4 shows a resource scheduling method according to an embodiment of this application. The method includes the following steps.

Step 401: A physical core scheduling unit 111 determines that a configuration of a computing instance 120 needs to be updated.

In this embodiment of this application, there are two scenarios in which the physical core scheduling unit 111 determines that the configuration of the computing instance 120 needs to be updated. One is that the physical core scheduling unit 111 actively determines that the configuration of the computing instance 120 needs to be updated, and the other is that a task scheduling unit 112 requests the physical core scheduling unit 111 to update the configuration of the computing instance 120.

### Scenario 1

There are many cases in which the physical core scheduling unit 111 actively determines that the configuration of the computing instance 120 needs to be updated. For example, when the physical core scheduling unit 111 creates another computing instance 120 and finds that an idle first physical core or second physical core in a current computing device 100 cannot meet a resource requirement of the another computing instance 120, that is, a quantity of idle first physical cores or second physical cores does not meet a requirement of the another computing instance 120 for the first physical core or the second physical core, creation of the another computing instance 120 is not supported. For example, a priority of the another computing instance 120 is relatively high, but all first physical cores in the current computing instance 120 have been occupied. For another example, the priority of the another computing instance 120 is relatively low, but all second physical cores in the current computing instance 120 have been occupied. For another example, the physical core scheduling unit 111 may determine resource utilization of each physical core by performing detection on status parameters of physical cores in the computing device 100. For example, it is found that resource utilization of a first physical core for executing a specific task is relatively low (lower than a specific utilization threshold) in a relatively long time. In this case, the physical core scheduling unit 111 may determine that the configuration of the computing instance 120 needs to be updated, and the first physical core needs to be changed to the second physical core. For another example, it is found that utilization of a second physical core for executing a specific task is relatively high in a relatively long time and approaches a maximum value, the physical scheduling unit may determine that the configuration of the computing instance 120 needs to be updated, and the second physical core needs to be changed to the first physical core.

### Scenario 2

When the task scheduling unit 112 finds that a quantity of computing resources required by a task does not match a computing capacity of a virtual processor executing the task, the task scheduling unit 112 may reallocate the task in a manner of step 305 to step 308. After the task scheduling unit 112 performs task reallocation, if there is still a case in which the quantity of computing resources required by the task does not match the computing capacity of the virtual processor executing the task, it indicates that a quantity of physical cores of various types in the current computing instance 120 cannot better meet a quantity of computing resources required by a task that needs to run on the computing instance 120.

The task scheduling unit 112 may determine a quantity of tasks whose quantities of required computing resources do not match computing capacities of virtual central processing units executing the tasks, and determine a physical core adjustment requirement. The physical core adjustment requirement describes manners of adjusting physical cores of different types in the computing instance 120, for example, a quantity of first physical cores that need to be adjusted (for example, a quantity of first physical cores that need to be added or a quantity of first physical cores that need to be reduced) or a quantity of second physical cores that need to be adjusted (for example, a quantity of second physical cores that need to be added or a quantity of second physical cores that need to be reduced). The task scheduling unit 112 initiates a resource change request to the physical core scheduling unit 111. The resource change request carries the physical core adjustment requirement.

For example, the task scheduling unit 112 finds that, among six tasks running on the computing instance 120, there are four tasks whose quantities of required computing resources do not match computing capacities of virtual central processing units executing the tasks, and after task reallocation, there are still two tasks whose quantities of required computing resources do not match the computing capacities of virtual central processing units executing the tasks.

When the two tasks are executed by a virtual processor that has a mapping relationship with the second physical core, the quantities of computing resources required by the two tasks are greater than the computing capacities of the virtual central processing units executing the tasks, which indicates that the two second physical cores currently need to be changed to two first physical cores. In other words, two first physical cores need to be added, or two second physical cores need to be reduced. The task scheduling unit 112 may initiate a resource change request to the physical core scheduling unit 111. The resource change request is used to request to add two first physical cores or reduce two second physical cores.

When the two tasks are executed by a virtual processor that has a mapping relationship with the first physical core, the quantities of computing resources required by the two tasks are less than the computing capacities of the virtual central processing units executing the tasks, which indicates that the two first physical cores currently need to be changed to two second physical cores. In other words, two second physical cores need to be added, or two first physical cores need to be reduced. The task scheduling unit 112 may initiate a resource change request to the physical core scheduling unit 111. The resource change request is used to request to add two second physical cores or reduce two first physical cores.

Certainly, when the task scheduling unit 112 finds that the quantity of computing resources required by the task does not match the computing capacity of the virtual processor executing the task, the task scheduling unit 112 may directly initiate the resource change request to the physical core scheduling unit 111 without using the manner of step 305 to step 308.

It should be noted that, in the foregoing description, the task scheduling unit 112 directly carries the physical core adjustment requirement in the resource change request. This is a manner of explicitly carrying a physical core adjustment requirement. Actually, during actual application, the task scheduling unit 112 may implicitly carry the physical core adjustment requirement in the resource change request. For example, the task scheduling unit 112 may indicate, by using the resource change request when a quantity of computing resources required by a task carried by the resource change request does not match a computing capacity of a virtual processor executing the task, the quantity of computing resources required by the task, and optionally, may further indicate the virtual processor executing the task. After receiving the resource change request, the physical core scheduling unit 111 may determine the adjustment manner of the physical core in a manner similar to that in which the task scheduling unit 112 determines the physical core adjustment requirement.

Step 402: The physical core scheduling unit 111 obtains a second configuration solution of the computing instance 120 based on a second configuration strategy. The second configuration strategy includes some or all of the following: status parameters of physical cores in the computing device 100, a preconfigured resource allocation strategy of the computing instance 120, and the physical core adjustment requirement of the computing instance 120. The physical core adjustment requirement of the computing instance 120 may be determined based on the resource change request initiated by the task scheduling unit 112. For descriptions of the status parameters of the physical cores in the computing device 100 and the preconfigured resource allocation strategy of the computing instance 120, refer to the foregoing content. Details are not described herein again.

If in step 401, the physical core scheduling unit 111 actively determines that the configuration of the computing instance 120 needs to be updated, the physical core scheduling unit 111 may adjust quantities of physical cores that are of different types and that are in the computing instance 120 based on a specification of a current to-be-created computing instance 120 and the status parameters of the physical cores in the computing device 100 and/or the resource allocation strategy of the computing instance 120, to obtain the second configuration solution of the computing instance 120. In other words, the physical core scheduling unit 111 may obtain the second configuration solution of the computing instance 120 by adjusting the quantities of physical cores that are of different types and that are in the computing instance 120.

For example, a priority of the current to-be-created computing instance 120 is relatively high, and four physical cores need to be configured. However, the current computing device 100 has only four second physical cores. A priority of a created computing instance 120 is relatively low, and a quantity of physical cores required by the specification of the computing instance 120 is 5. In this case, when creating the computing instance 120, the physical core scheduling unit 111 allocates four first physical cores and one second physical core to the computing instance 120. The physical core scheduling unit 111 may obtain a second configuration solution of the created computing instance 120, reduce a quantity of first physical cores occupied by the created computing instance 120 in the first configuration solution, and increase a quantity of second physical cores. For example, the physical core scheduling unit 111 may adjust three first physical cores occupied by the created computing instance 120 to the second physical cores.

It should be noted that a manner in which the physical core scheduling unit 111 determines a computing instance 120 whose configuration needs to be updated and obtains the second configuration solution of the computing instance 120 is not limited in this embodiment of this application.

When determining the computing instance 120 whose configuration needs to be updated, the physical core scheduling unit 111 may determine, based on the priority of the computing instance 120 and/or the quantities of physical cores that are of different types and that are in the configuration solution of the computing instance 120 (the configuration solution herein is a configuration solution on which a current configuration of the computing instance 120 is based), the computing instance 120 whose configuration needs to be updated. The physical core scheduling unit 111 may select, as the computing instance 120 whose configuration needs to be updated, a computing instance 120 that has a lowest priority in the computing instances 120 and that has occupied the first physical core. The physical core scheduling unit 111 may alternatively select, as the computing instance 120 whose configuration needs to be updated, a computing instance 120 that occupies the most first physical cores in the created computing instances 120 and whose priority is lower than that of the to-be-created computing instance 120. When determining the computing instance 120 whose configuration needs to be updated, the physical core scheduling unit 111 may alternatively sort the computing instance 120 based on the priority of the computing instance 120, to preferentially meet requirements of computing instances 120 with a higher priority for physical cores of different types. A principle of fairness is followed in the computing instances 120 with the same priority: each computing instance 120 has the same right to obtain resources. It is assumed that currently four cores are required in the computing instances 120 with the same priority, and each computing instance 120 with the same priority needs to occupy one first physical core. In this case, two computing instances 120 with the same priority simultaneously require to add one first physical core. However, only one first physical core is left. To comply with the principle of fairness, the physical core scheduling unit 111 may alternately schedule the left one first physical core in the two computing instances 120, to ensure that computing instances 120 with the same priority have a same capacity of obtaining the resources.

When obtaining the second configuration solution of the computing instance 120, the physical core scheduling unit 111 may reduce, based on a specified proportion, a quantity of first physical cores occupied in the computing instance 120. For example, the physical core scheduling unit 111 may reduce first physical cores by 50%. Alternatively, the quantity of first physical cores occupied in the computing instance 120 may be reduced based on a specified value. For example, the physical core scheduling unit 111 may reduce three first physical cores.

If in step 401, the task scheduling unit 112 requests to obtain the second configuration solution of the computing instance 120 from the physical core scheduling unit 111, the physical core scheduling unit 111 receives the resource change request from the task scheduling unit 112, and the physical core scheduling unit 111 may determine the physical core adjustment requirement of the computing instance 120 based on information carried in the resource change request. The physical core scheduling unit 111 may adjust the quantities of physical cores that are of different types and that are in the computing instance 120 based on the physical core adjustment requirement of the computing instance 120 and the status parameters of the physical cores in the computing device 100 and/or the resource allocation strategy of the computing instance 120, to obtain the second configuration solution of the computing instance 120. In this case, the physical core scheduling unit 111 may determine, based on the status parameters of the physical cores in the computing device 100, whether the physical core adjustment requirement of the computing instance 120 can be met currently, for example, determine whether the current idle first physical core in the computing device 100 meets the physical core adjustment requirement of the computing instance 120. If there are physical core adjustment requirements of a plurality of computing instances 120, the physical core scheduling unit 111 may further determine, with reference to the priorities of the computing instances 120 and the status parameters of the physical cores in the computing device 100, whether the physical core adjustment requirements of the plurality of computing instances 120 can be met currently. The physical core scheduling unit 111 may preferentially obtain a second configuration solution of a computing instance 120 with a higher priority, and then obtain a second configuration solution of the computing instance 120 with a lower priority. When the status parameters of the physical cores in the current computing device 100 cannot meet the physical core adjustment requirements of the plurality of computing instances 120 at the same time, the physical core scheduling unit 111 may alternatively choose to preferentially meet the physical core adjustment requirement of the computing instance 120 with a higher priority. In other words, when obtaining the second configuration solution of the computing instance 120 with a higher priority, the physical core scheduling unit 111 may adjust the quantities of physical cores that are of different types and that are in the computing instance 120 based on the physical core adjustment requirement of the computing instance 120, to obtain the second configuration solution of the computing instance 120.

Step 403: The physical core scheduling unit 111 reconfigures the computing instance 120 based on the second configuration solution of the computing instance 120, to implement remapping from the virtual processor to the physical core.

When performing step 403, the physical core scheduling unit 111 may configure, for the computing instance 120, a physical core recorded in the second configuration solution of the computing instance 120, and remap the physical core to the virtual processor, that is, update a mapping relationship between the physical core and the virtual processor. The physical core scheduling unit 111 may send the updated mapping relationship between the physical core and the virtual processor to the task scheduling unit 112.

After the physical core scheduling unit 111 performs step 403, the task scheduling unit 112 may learn of, from the physical scheduling unit, the mapping relationship between the remapped virtual central processing unit and physical core. The task scheduling unit 112 may perform task reallocation on the tasks based on the mapping relationship between the remapped virtual central processing unit and physical core again. Especially, the task scheduling unit 112 may perform task reallocation on a task that is among a plurality of tasks in the computing instance 120 and whose quantity of required computing resources does not match the computing capacity of the virtual processor executing the task. For the manner of task reallocation, refer to steps 305 to 307. Details are not described herein again.

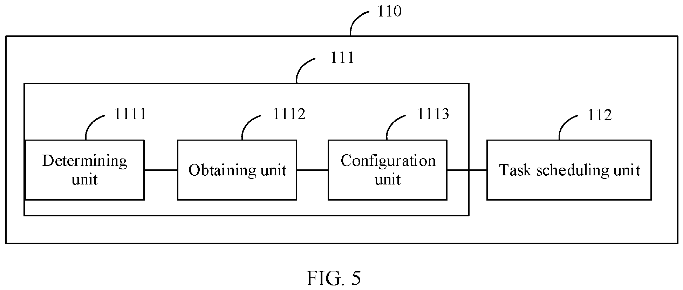

Based on a same inventive concept as the method embodiments, an embodiment of this application further provides a scheduling apparatus, which is configured to perform the method performed by the scheduling apparatus in the method embodiments shown in FIG. 4. For a related feature, refer to the foregoing method embodiments. Details are not described herein again. FIG. 5 shows a scheduling apparatus according to an embodiment of this application. A scheduling apparatus 110 includes a physical core scheduling unit 111. The physical core scheduling unit 111 includes a determining unit 1111, an obtaining unit 1112, and a configuration unit 1113.

The determining unit 1111 is configured to determine that a configuration of a first computing instance needs to be updated.

The obtaining unit 1112 is configured to obtain a configuration solution of the first computing instance based on status parameters of physical cores included in a processor of a computing device and a resource allocation strategy. The configuration solution indicates quantities of first physical cores and second physical cores included in the first computing instance.

The configuration unit 1113 is configured to update the configuration of the first computing instance based on the configuration solution of the first computing instance.

In a possible implementation, when a quantity of computing resources required by a task is greater than a computing capacity provided by the first computing instance, the determining unit 1111 determines that the configuration of the first computing instance needs to be updated. The quantity of computing resources required by the task indicates a quantity of computing resources required by the task running on the first computing instance.

In a possible implementation, when an idle physical core in the computing device cannot meet a resource requirement of a to-be-created second computing instance, the determining unit 1111 may determine that the configuration of the first computing instance needs to be updated.

In a possible implementation, when resource utilization of a target physical core in the computing instance is lower than a utilization threshold, the determining unit 1111 may determine that the configuration of the first computing instance needs to be updated.

In a possible implementation, the physical cores include a target physical core. Resource utilization of the target physical core is lower than the utilization threshold. The obtaining unit 1112 may adjust a type of the target physical core from a first physical core to a second physical core. A computing capacity of the first physical core is greater than a computing capacity of the second physical core.

In a possible implementation, the apparatus further includes a task scheduling unit 112. The task scheduling unit 112 can configure, for the first physical core or the second physical core included in the first computing instance, a task that needs to be executed.

In a possible implementation, the task scheduling unit 112 may obtain the quantity of computing resources required by the task. The quantity of computing resources required by the task indicates the quantity of computing resources required by the task running on the first computing instance. The task scheduling unit 112 determines the first physical core or the second physical core based on the quantity of computing resources required by the task to execute the task.

In a possible implementation, the quantity of computing resources required by the task is determined based on a performance parameter of the computing device in the running process of the task.

It should be noted that, in this embodiment of this application, division into the units is an example, and is merely a logical function division. During actual implementation, another division manner may be used. Functional units in embodiments of this application may be integrated into one processing unit, each of the units may exist alone physically, or two or more units may be integrated into one unit. The integrated unit may be implemented in a form of hardware, or may be implemented in a form of a software functional unit.

All or some of the foregoing embodiments may be implemented by software, hardware, firmware, or any combination thereof. When software is used to implement embodiments, the foregoing embodiments may be implemented completely or partially in a form of a computer program product. The computer program product includes one or more computer instructions. When the computer program instructions are loaded and executed on a computer, all or some of the procedures or functions according to embodiments of the present invention are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a web site, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive (solid-state drive, SSD).

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A resource scheduling method, wherein the method is applied to a computing device, physical cores of a processor of the computing device comprise a first physical core and a second physical core, a computing capacity of the first physical core is different from a computing capacity of the second physical core, and the method comprises:
Determining that a configuration of a first computing instance needs to be updated;
obtaining a configuration solution of the first computing instance based on status parameters of the physical cores comprised in the processor of the computing device and a resource allocation strategy, wherein the configuration solution indicates quantities of first physical cores and second physical cores comprised in the first computing instance; and
updating the configuration of the first computing instance based on the configuration solution of the first computing instance.

2. The method according to claim 1, wherein the determining that a configuration of a first computing instance needs to be updated comprises:
when a quantity of computing resources required by a task is greater than a computing capacity provided by the first computing instance, determining that the configuration of the first computing instance needs to be updated, wherein
the quantity of computing resources required by the task indicates a quantity of computing resources required by a task running on the first computing instance.

3. The method according to claim 1 or 2, wherein the determining that a configuration of a first computing instance needs to be updated comprises:
when a quantity of idle physical cores in the computing device mismatch a resource requirement of a to-be-created second computing instance, determining that the configuration of the first computing instance needs to be updated.

4. The method according to any one of claims 1 to 3, wherein the physical cores comprise a target physical core, and the method further comprises:
determining that resource utilization of the target physical core is lower than a utilization threshold, and adjusting a type of the target physical core from the first physical core to the second physical core, wherein the computing capacity of the first physical core is higher than the computing capacity of the second physical core.

5. The method according to any one of claims 1 to 4, wherein after the updating the configuration of the first computing instance, the method further comprises:
configuring, for the first physical core or the second physical core comprised in the first computing instance, a task that needs to be executed.

6. The method according to claim 5, wherein the configuring, for the first physical core or the second physical core comprised in the first computing instance, a task that needs to be executed comprises:
obtaining the quantity of computing resources required by the task, wherein the quantity of computing resources required by the task indicates the quantity of computing resources required by the task running on the first computing instance; and
determining, based on the quantity of computing resources required by the task, the first physical core or the second physical core that executes the task.

7. The method according to claim 2 or 5, wherein the quantity of computing resources required by the task is determined based on a performance parameter of the computing device in a running process of the task.

8. A scheduling apparatus, wherein the scheduling apparatus is deployed on a computing device, physical cores of a processor of the computing device comprise a first physical core and a second physical core, a computing capacity of the first physical core is different from a computing capacity of the second physical core, and the scheduling apparatus comprises a determining unit, an obtaining unit, and a configuration unit;
the determining unit is configured to determine that a configuration of a first computing instance needs to be updated;
the obtaining unit is configured to obtain a configuration solution of the first computing instance based on status parameters of the physical cores comprised in the processor of the computing device and a resource allocation strategy, wherein the configuration solution indicates quantities of first physical cores and second physical cores comprised in the first computing instance; and
the configuration unit is configured to update the configuration of the first computing instance based on the configuration solution of the first computing instance.

9. The apparatus according to claim 8, wherein the determining unit is configured to:
when a quantity of computing resources required by a task is greater than a computing capacity provided by the first computing instance, determine that the configuration of the first computing instance needs to be updated, wherein
the quantity of computing resources required by the task indicates a quantity of computing resources required by a task running on the first computing instance.

10. The apparatus according to claim 8 or 9, wherein the determining unit is configured to:
when a quantity of idle physical cores in the computing device mismatch a resource requirement of a to-be-created second computing instance, determine that the configuration of the first computing instance needs to be updated.

11. The apparatus according to any one of claims 8 to 10, wherein the physical cores comprise a target physical core, and the obtaining unit is configured to:
determine that resource utilization of the target physical core is lower than a utilization threshold, and adjust a type of the target physical core from the first physical core to the second physical core, wherein the computing capacity of the first physical core is higher than the computing capacity of the second physical core.

12. The apparatus according to any one of claims 8 to 11, wherein the apparatus further comprises a task scheduling unit, and the task scheduling unit is configured to:
configure, for the first physical core or the second physical core comprised in the first computing instance, a task that needs to be executed.

13. The apparatus according to claim 12, wherein the task scheduling unit is configured to:
obtain a quantity of computing resources required by the task, wherein the quantity of computing resources required by the task indicates the quantity of computing resources required by the task running on the first computing instance; and
determine, based on the quantity of computing resources required by the task, the first physical core or the second physical core that executes the task.

14. The apparatus according to claim 8 or 13, wherein the quantity of computing resources required by the task is determined based on a performance parameter of the computing device in a running process of the task.

15. A computing device, comprising a memory and a processor, wherein the memory stores program instructions, and the processor runs the program instructions to perform the method according to any one of claims 1 to 7.

16. A computer-readable storage medium, wherein the computer-readable storage medium stores instructions, and when the instructions are run on a computer, the computer is enabled to perform the method according to any one of claims 1 to 7.
